## Europäisches Patentamt

## European Patent Office

## Office européen des brevets

(11) Veröffentlichungsnummer: **0 033 454**
**B1**

(12) **EUROPÄISCHE PATENTSCHRIFT**

(45) Veröffentlichungstag der Patentschrift:
21.09.83

(51) Int. Cl.³: **F 16 C 33/54, B 21 D 53/12**

(21) Anmeldenummer: 81100309.4

(22) Anmeldetag: 16.01.81

(54) Verfahren zur Herstellung eines Käfigs für Rollenlager (Schweisslösung).

(30) Priorität: **25.01.80 DE 3002689**

(43) Veröffentlichungstag der Anmeldung:
**12.08.81 Patentblatt 81/32**

(45) Bekanntmachung des Hinweises auf die Patenterteilung:
**21.09.83 Patentblatt 83/38**

(84) Benannte Vertragsstaaten:
**DE FR GB IT**

(56) Entgegenhaltungen:
**DE-A-1 625 643**
**DE-A-2 333 237**
**DE-A-2 416 320**
**DE-C-867 629**
**DE-U-1 909 842**
**DE-U-7 935 982**
**DE-U-6 606 962**
**FR-A-1 089 184**
**US-A-1 395 244**
**US-A-3 075 278**
**US-A-3 256 585**

(73) Patentinhaber: **Otto Bihler Maschinenfabrik GmbH & Co. KG, Lechbrucker Strasse 15, D-8959 Halblech/Füssen (DE)**

(72) Erfinder: **Bihler, Otto, Schleiferweg 2, D-8959 Halblech (DE)**
Erfinder: **Augenstein, Reiner, Kapellenweg 15, D-8959 Halblech (DE)**

(74) Vertreter: **Weickmann, Heinrich, Dipl.-Ing. et al, Patentanwälte Dipl.-Ing. H. Weickmann Dipl.-Phys.Dr. K. Fincke Dipl.-Ing. F.A. Weickmann Dipl.-Chem. B. Huber Dr.-Ing. H. Liska Möhlstrasse 22, D-8000 München 86 (DE)**

ACTORUM AG

Verfahren zur Herstellung eines Käfigs für Rollenlager (Schweisslösung)

Die Erfindung betrifft ein Verfahren zur Herstellung eines Käfigs, insbesondere für Kegelrollenlager durch Bereitstellen eines Flachstreifens mit in Streifenlängsrichtung aufeinanderfolgenden Fenstern, Rollen des Flachstreifens zu einem Ring und gegebenenfalls Verbinden der Ringenden an der Schlussstelle.

Dieses Verfahren ist bekannt beispielsweise aus der DE-OS Nr. 2416320.

Bei dem bekannten Verfahren werden die Fenster aus einem Blechstreifen ausgestanzt, derart, dass an den Rändern des Blechstreifens Längsstege und zwischen diesen Längsstegen Querstege zur Trennung aufeinanderfolgender Fenster entstehen. Der so gebildete Flachstreifen mit Fenstern wird sodann gegebenenfalls nach Verformung der Querstege zu einem Ring gerollt, wobei die Enden der Längsstege miteinander verbunden werden können, beispielswiese formschlüssig oder durch Schweissen oder durch beides miteinander verbunden werden können.

An dem bekannten Verfahren ist verschiedenes zu beanstanden:

Zunächst führt das bekannte Verfahren zu einem erheblichen Materialverbrauch, denn das Material, welches aus den Fenstern ausgestanzt wird, ist Abfall. Weiter zu beanstanden ist, dass die Kanten der Fenster, welche der Führung der Rollen dienen, nicht oder nur unter sehr grossem Verfahrensaufwand so bearbeitet werden können, dass sie eine optimale, verschleissarme Führung der Rollen bewirken.

Schliesslich bereitet es auch Schwierigkeiten, die Käfige nach dem bekannten Verfahren aus gehärtetem oder sonst vergütetem Material herzustellen, so dass im Falle der Forderung nach Schaffung von Käfigen aus hartem oder sonst vergütetem Material eine nachträgliche Härtung, d.h. eine Härtung nach dem Biegen des Flachstreifens, in Betracht gezogen werden muss, die aber wegen der Gefahr des Verziehens und des Verlusts der Masshaltigkeit beim Härten wieder auf Bedenken stösst.

Bei dem bekannten Verfahren liegen die aus den Längsstegen gebildeten Ringe notwendigerweise auf dem gleichen Durchmesser, was bei Einbau der Käfige in bestimmte Typen von Kegelrollenlagern, insbesondere solchen mit starker Neigung der Kegelrollenachse gegen die Lagerachse zu Unterbringungsschwierigkeiten führen kann.

Daneben steht für die Herstellung von konischen Kegelrollenlagerkäfigen bisher eine weitere, sehr umständliche und auch sonst unbefriedigende Arbeitsweise zur Verfügung. Man stellt durch Tiefziehen, meist in mehreren Stufen, konische Näpfe her. Von diesen konischen Näpfen wird dann der die kleine Basis bildende Boden freigeschnitten. Anschliessend werden die Fenster in den Konusmantel eingeschnitten. Dieses Einschneiden der Fenster kann praktisch nur einzeln Fenster für Fenster durchgeführt werden. Dies ist zeitaufwendig. Vorrichtungen, die auf einmal sämtliche Fenster ausstanzen, sind zwar theoretisch denkbar, in der Praxis aber derart kompliziert und störanfällig, dass eine praktische Anwendung bisher nicht bekannt geworden ist. Eine Härtung des Materials ist im Hinblick auf den Verfahrensschritt des Tiefziehens allenfalls im Anschluss an das Tiefziehen und das Fensterausstanzen möglich, unterliegt aber starken Bedenken wegen möglichen Verzugs.

Aus der deutschen Patentanschrift Nr. 867629 ist es bekannt, einen Käfig für Kegelrollenlager dadurch herzustellen, dass man auf zwei konzentrisch in axialem Abstand gehaltene, vorgefertigte Endringe Doppel-T-förmige Stege einzeln aufschweisst, deren Querbalken entsprechend dem unterschiedlichen Durchmesser der Endringe unterschiedliche Länge in Umfangsrichtung besitzen. Diese Herstellungsweise erfordert sehr komplizierte Vorrichtungen, die nicht ohne weiteres zur Verfügung stehen.

Der Erfindung liegt die Aufgabe zugrunde, ein Verfahren anzugeben, das ohne wesentlichen Materialverlust arbeitet, das Problem der Kantenbehandlung entschärft, gute Voraussetzungen bietet, um gewünschtenfalls gehärtete oder sonst vergütete Führungen für die Rollen zu schaffen, die Anordnung der Längsstege am fertigen Käfig auf unterschiedlichen Enddurchmessern erlaubt und mit verhältnismässig einfachen Vorrichtungen durchgeführt werden kann.

Zur Lösung dieser Aufgabe wird erfindungsgemäss vorgeschlagen, dass man zunächst einen kammförmigen Einlängsstegflachstreifen durch Verbinden eines Längsstegs mit dem jeweils einen Ende einer Vielzahl von Querstegen bildet, bei dem die freien Enden der Querstege gegenüber der Ebene des Längsstegs in radialer Richtung des zu bildenden Rings derart versetzt sind, dass nach dem anschliessenden Rollen die freien Enden der Querstege auf einem Kreis mit einem von dem Durchmesser des aus dem Längssteg gebildeten Rings unterschiedlichen Durchmesser liegen, und dass man nach dem Rollen des kammförmigen Einlängsstegflachstreifens zum Ring die freien Enden der Querstege mit einem Abschlussring verbindet.

Das erfindungsgemässe Verfahren erzielt hier auf einen Schlag eine ganze Reihe von Vorteilen: Der Vorteil der Materialersparnis ist besonders deutlich gegenüber dem oben diskutierten, aus der Praxis bekannten Verfahren, weil neben dem Verschnitt für die Fensterbildung auch noch Verschnitt in Wegfall kommt, der bei jenem durch das Freischneiden des Bodens in Kauf genommen werden musste. Die Führungseigenschaften können verbessert werden dank der etwa durch Walzen oder Ziehen gewonnenen Führungsflächen der Querstege und der Längsstege im Gegensatz zu den gestanzten Kanten bekannter Käfige. Das Verarbeiten von gehärtetem oder in sonstiger Weise vergütetem Draht- oder Bandmaterial für die Längsstege und/oder die Querstege ist möglich, insbesondere dann, wenn eine nachträgliche Profilierung der Querstege nicht erforderlich ist. Die Materialfaser der Querstege liegt in einheitlicher Richtung, was nicht zu erreichen ist, wenn von einem tiefgezogenen Napf ausgegangen wird.

Für das Verschweissen des ersten Längsstegs mit Querstegen stehen Maschinen zur Verfügung, welche die automatische Zuführung des Materials des Längsstegs und des Materials der Querstege bewirken und unmittelbar an die Zuführung die Querstege an dem Längssteg anschweissen.

Das für die Querstege und den Längssteg zur Anwendung kommende Material kann gewalztes oder gezogenes Draht- oder Bandmaterial sein, dessen Oberfläche sich in vorteilhafter Weise von der Oberfläche der Kanten unterscheidet, die beim herkömmlichen Fensterstanzen als Führungskanten für die Rollen gebildet werden. Insbesondere ist es möglich, den Längssteg und/oder die Querstege von einem Profilmaterial mit abgerundeten Kanten zu bilden. Diese abgerundeten Kanten können dann die Begrenzungskanten der Fenster am Rollenumfang und/oder an den Rollenenden bilden. Auch wenn man an den Querstegen — hierauf wird später noch einzugehen sein — zur Schaffung bestimmter Fensterformen in Anpassung an kompliziertere Lagergeometrien Randbeschneidungen oder -prägungen vornehmen muss, um gewünschte Punkt- oder Linienführungen für die Rollen zu gewinnen, so lässt es sich doch in vielen Fällen ermöglichen, die für die Führung der Rollen wesentlichen Teile der Fenstereinrahmungen aus dem unbearbeiteten Profilmaterial zu belassen, so wie es aus dem Walzwerk oder der Ziehdüse kommt und damit den Vorteil einer optimalen verschleissarmen Führung zu gewinnen. Dabei ist insbesondere auch zu bedenken, dass eine Führung der Rollen an abgerundeten Führungsflächen der Querstege und/oder der Längsstege verbesserte Schmierungsverhältnisse ergibt, insofern, als sich in den Einlassspalten zwischen den Rollenoberflächen und den gerundeten Profilen der Stege ein Schmiermittelknet ansammelt, der stetig einen dünnen Schmierfilm über die ganze Oberfläche der jeweiligen Rollen zur Verfügung stellt.

Die Längsstege und/oder Querstege können aus gehärtetem Material hergestellt werden. Es hat sich gezeigt, dass die Herstellung dieser Stege aus gehärtetem Material den Biegevorgang und die Biegegenauigkeit nicht nachteilig beeinflusst.

Der Versatz der freien Enden der Querstege gegenüber der Ebene des den Kammrücken bildenden Längsstegs kann dadurch bewirkt werden, dass man die Querstege nach dem Anbringen an dem Längssteg biegt.

Die Querstege können bei der Herstellung eines Käfigs für ein Kegelrollenlager derart gebogen werden, dass sie, ausgehend von der kleinen Basis des Käfigs, zunächst in der durch die Achsen der Kegelrollen definierten Konusfläche verlaufen, sodann radial auswärts springen, sodann ausserhalb der durch die Kegelrollenachsen definierten Konusfläche parallel zu Mantellinien der Kegelrollen verlaufen und die andere Basis des Käfigs erreichen. Auf diese Weise erhält man einen Käfig, in welchem die Kegelrollen in radialer Richtung mit geringem Radialspiel fixiert sind, so dass Käfig und Rollen als vormontierte Einheit gehandhabt werden können.

Man kann die Querstege bei der Herstellung eines Käfigs für ein Kegelrollenlager auch in der Weise biegen, dass sie, ausgehend von der kleinen Basis des Käfigs, zunächst in einer durch die Kegelrollenachsen definierten Konusebene verlaufen, dann gegenüber diese Konusebene radial einwärts springen, dann radial innerhalb dieser Konusfläche parallel zu einer Mantellinie der jeweiligen Kegelrolle verlaufen, dann radial auswärts springen, dann radial ausserhalb der Konusfläche parallel zu einer Mantellinie der jeweiligen Kegelrolle verlaufen und schliesslich die grosse Basis des Käfigs erreichen. Auch durch diese Massnahmen erhält man einen Käfig, in dem die Kegelrollen in radialer Richtung gegebenenfalls mit geringem radialen Spiel gegen Herausfallen aus dem Käfig gesichert sind. Die Rollen müssen dann natürlich beim Einbau in den Käfig zwischen die Stege eingefedert werden.

Im Hinblick auf gewünschte Anlageverhältnisse ziwschen den Querstegen und den Kegelrollen kann es sich als notwendig erweisen, dass man die Ränder der Querstege derart beschneidet, dass sie unter Berücksichtigung der Lagergeometrie die Kegelrollen in Umfangsrichtung des Lagers und gegebenenfalls in Radialrichtung des Käfigs in gewünschter Weise führen. Man kann trotz der Randbeschneidung der Querstege den Vorteil der verbesserten Führung der Kegelrollen zwischen den Stegen immer noch erreichen, indem man die Führung wenigstens teilweise nicht beschnittenen Abschnitten der Kanten der Querstege überlässt.

Die bei der Herstellung von konischen Käfigen nachträglich aufzubringenden Abschlussringe kann man durch Rollen eines zunächst geradlinigen Abschlussringstreifens gewinnen, so dass man auch hierbei nicht mit Verschnitt zu rechnen hat.

Das Aufbringen des Abschlussrings auf die freien Enden der Querstege kann dadurch erleichtert werden, dass man an dem Abschlussring und/oder an den Querstegen Richtanschläge zum Ausrichten der freien Enden der Querstege in radialer und/oder in peripherer Richtung vorsieht.

Um Käfige höchster Genauigkeit zu erzielen, kann man vor dem Anschweissen des Abschlussrings an den freien Enden der Querstege diese Querstege zentrieren und gegebenenfalls nachformen. Die Zentrierung und gegebenenfalls Nachformung kann man vermittels einer Vorrichtung durchführen, die aus einem Innenwerkzeug mit in Flucht zu den Fenstern liegenden Ausnehmungen und aus einem Aussenwerkzeug mit in Flucht zu den Fenstern liegenden Schiebern besteht, wobei die Schieber durch die Fenster in die Ausnehmungen einführbar sind.

Aus biegetechnischen Gründen wird man bei der Herstellung von konischen Käfigen für Kegelrollenlager bevorzugt diejenigen Längsstege, welche die grössere Basis des Käfigs ergeben, mit den Querstegen in der Ebene verbinden und denjenigen Abschlussring, welcher der kleineren Basis entspricht, nachträglich aufschweissen.

Die Erfindung betrifft weiter ein Verfahren zur Herstellung eines Käfigs für Rollenlager nach einem der Ansprüche 15, 16 oder 17 sowie einer Rollenlagerkäfig nach dem Anspruch 18.

Die beiliegenden Figuren erläutern die Erfindung. Es stellen dar:

Fig. 1 einen Flachstreifen zur Herstellung eines Käfigs für ein Kegelrollenlager,

Fig. 2 einen Käfig, hergestellt aus dem Flachstreifen gemäss Fig. 1,

Fig. 3 einen Schnitt nach Linie III-III der Fig. 1,

Fig. 4 einen Flachstreifen für eine weitere Form eines Käfigs für ein Kegelrollenlager,

Fig. 5 das Kegelrollenlager, hergestellt aus dem Flachstreifen gemäss Fig. 4,

Fig. 6 eine weitere Form eines Käfigs für ein Kegelrollenlager,

Fig. 7 einen nach dem Verfahren gemäss der Erfindung hergestellten Käfig für ein Zylinderrollenlager, und

Fig. 8 eine Vorrichtung zum Zentrieren der Querstege beim Anschweissen eines Abschlussrings an einen Käfig für ein Kegelrollenlager gemäss Fig. 2.

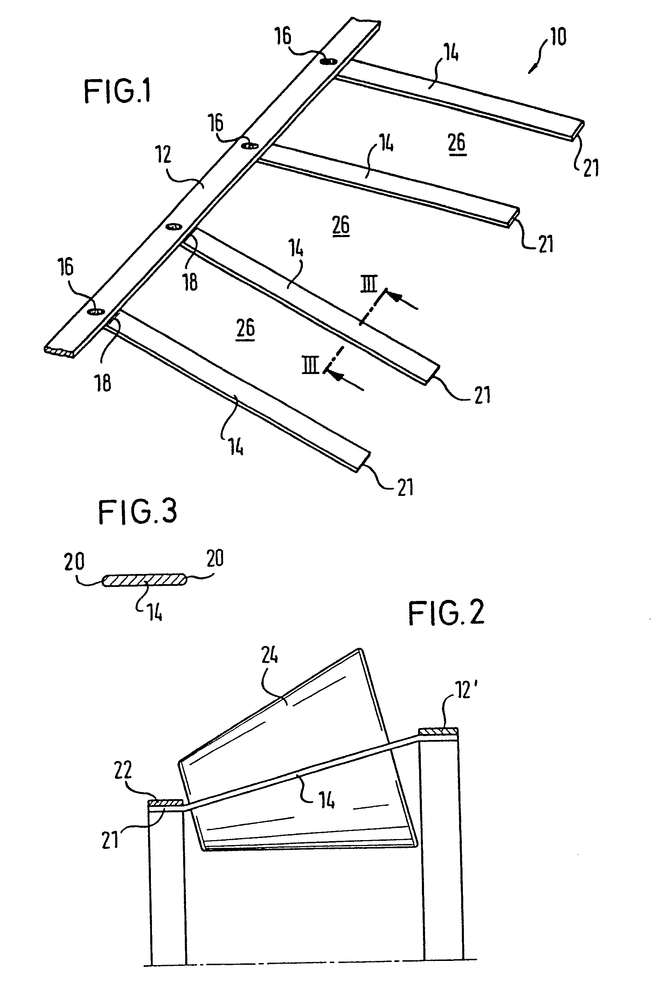

Der in der Fig. 1 dargestellte und ganz allgemein mit 10 bezeichnete Flachstreifen ist gebildet von einem Längssteg 12 und an diesem Längssteg 12 frei ausladend befestigten Querstegen 14. Die Querstege 14 sind an dem Längssteg 12 durch Punktschweissungen 16 befestigt. Die beiden in Fig. 1 linken Querstege 14 sind um unmittelbar an dem Längssteg 12 anliegende Biegelinien 18 nach unten gebogen. Der Querschnitt der Querstege 14 ist in Fig. 3 dargestellt. Man erkennt dort, dass die Kanten 20 gerundet sind. Entsprechend gerundet sind die Kanten des Längsstegs 12.

Der durch Schweissen hergestellte Flachstreifen 10 wird nach dem Abbiegen der Querstege 14 um die Biegelinien 18 um einen Dorn gerollt, so dass sich das in Fig. 2 dargestellte Gebilde, bestehend aus dem einen Abschlussring 12′ und den Querstegen 14 ergibt; die Querstege 14 liegen dabei auf einer Konusfläche um die Achse des Abschlussrings 12′. Anschliessend an die Rollung des Flachstreifens werden die freien Enden 21 der Querstege 14 mit einem weiteren Abschlussring 22 verschweisst. Der Abschlussring 22 wurde vorher aus einem flachen Materialstreifen gebogen.

Die Vorgänge des Zuführens des Längsstegs 12, der Querstege 14, des Biegens der Querstege 14, des Rollens des Längsstegs 12 zum Abschlussring 12′, des Zuführens des Abschlussrings 22 und des Anschweissens des Abschlussrings 22 an den freien Enden 21 der Querstege können fortlaufend auf einer Draht- oder Bandbiege- und -stanzmaschine durchgeführt werden. Auf dieser Maschine können die Querstege 14 entweder bereits vereinzelt an den Längssteg 12 herangeführt werden oder als Vorlaufende eines noch zusammenhängenden Bandes, von dem sie im letzteren Fall jeweils nach Anschweissen an den Längssteg 12 abgeschnitten werden. Die Biegung des zweiten Abschlussrings 22 kann auf der gleichen oder einer ähnlichen Maschine durchgeführt werden.

In der Fig. 2 liegen die Querstege 14 auf einer Konusfläche, welche durch die Achsen der Kegelrollen 24 bestimmt ist. Es ist erwünscht, dass die Kanten 20 der Querstege 14 unbeschnitten bleiben, weil dann die vom Walz- oder Ziehvorgang her bestehenden glatten Rundungen an den Kanten 14 die Führung der Kegelrollen 24 übernehmen, was für die Führungs- und Schmierfilmbildungsverhältnisse optimal ist. Dabei kommt der Umstand zugute, dass durch das Biegen der Querstege 14 um die Biegungslinien 18 und nachfolgende Rollen des Längsstegs 12′ die Abstände der Querstege 14 voneinander im Bereich der freien Enden 21 verringert werden. Es verjüngen sich also die Fenster 26 des fertigen Käfigs in der gleichen Richtung wie die Kegelrollen 24. Da aber nun die Lagergeometrie regelmässig vorgeschrieben ist und der Käfig an die Lagergeometrie angepasst werden muss, ist es nicht immer möglich, ohne Beschneidung der Kanten 20 der Querstege 14 auszukommen. Wenn eine solche Beschneidung notwendig ist, so bietet das erfindungsgemässe Verfahren immerhin noch die Möglichkeit, die beschnittenen Kanten der Querstege 14 am flachen Materialstreifen nachzubearbeiten, etwa durch Prägung. Die Möglichkeit der vorherigen Härtung des Querstreifenmaterials bietet sich natürlich in erster Linie dann an, wenn die Querstreifen nicht beschnitten werden müssen. Grundsätzlich ist eine vorherige Härtung oder sonstige Vergütung auch dann noch möglich, wenn die Querstreifen im Hinblick auf die Kegelrollenform beschnitten werden müssen.

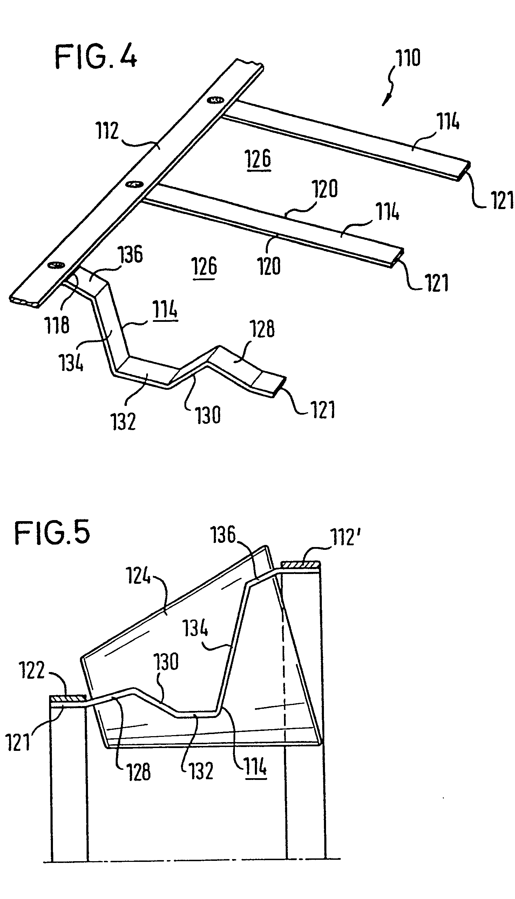

In der Ausführungsform nach den Fig. 4 und 5 sind entsprechende Teile mit gleichen Bezugszeichen versehen wie in den Fig. 1 bis 4, jeweils vermehrt um die Zahl 100.

Die Herstellung des Käfigs gemäss Fig. 5 erfolgt in der gleichen Weise wie die Herstellung des Käfigs gemäss Fig. 2, mit dem einen Unterschied, dass die Querstege 114 mehrfach gebogen werden. Dabei ergibt sich ein Abschnitt 128 in der durch die Kegelrollenachsen definierten Konusfläche, ein radial einwärts gerichteter Sprung 130, ein Abschnitt 132 radial einwärts der durch die Kegelrollenachsen definierten Konusfläche parallel zur zugehörigen Mantellinie der Kegelrolle, ein radial auswärts gerichteter Sprung 134 und ein weiterer Führungsabschnitt 136 radial ausserhalb der durch die Kegelrollenachsen definierten Konusfläche. Die Abschnitte 128, 132 und 136 werden bevorzugt so gelegt, dass sie in Punkt- oder Linienberührung mit der jeweiligen Kegelrolle sind. Dies ist im Regelfall nicht ohne Beschneidung der Kanten der Querstege 114 möglich. Die Kegelrollen 124 können bei dieser Ausführungsform durch die Querstege 114 in radialer Richtung einwärts und auswärts gehalten werden und müssen dann bei der Montage eingefedert werden. Man spricht von einer Dreipunktführung wegen der Führungsstellen im Bereich der Abschnitte 128, 132 und 136. Die Kantenbeschneidungen müssen in der Regel mindestens im Bereich der Sprünge 130 und 134 liegen.

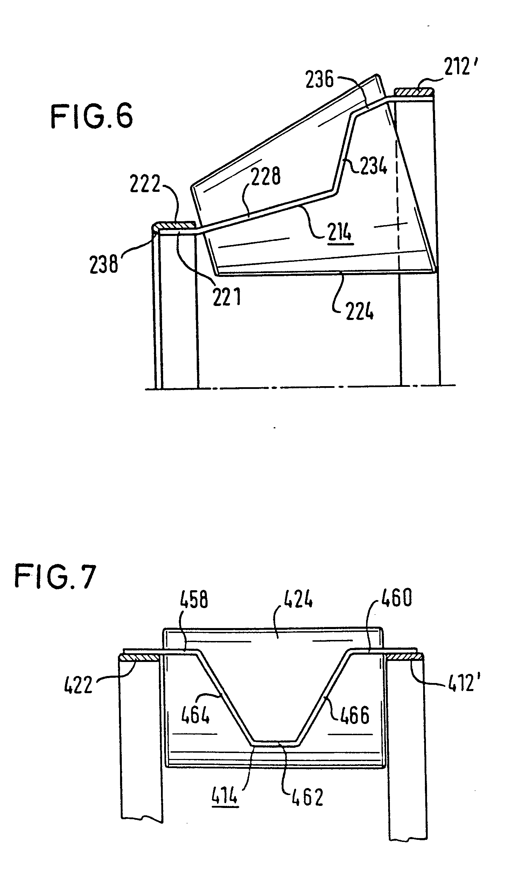

Fig. 6 zeigt eine Abwandlung zu Fig. 5. Analoge Teile sind mit gleichen Bezugszeichen versehen wie in Fig. 5, jeweils vermehrt um die Zahl 100.

Der Biegeverlauf der Stege 214 ist hier vereinfacht. Es gibt nur noch die Abschnitte 228, die in einer durch die Kegelrollenachsen definierten Konusfläche liegen, die radial auswärts gerichteten Sprünge 234 und die mantellinienparallelen Abschnitte 236 ausserhalb der durch die Kegelrollenachsen definierten Konusfläche. Eine Radialfixierung der Kegelrollen 224 ist hier allenfalls noch nach radial aussen möglich. Die Herstellung des Käfigs ist, von der unterschiedlichen Biegung der Querstege 214 abgesehen, unverändert. An dem Abschlussring 222 ist ein Bund 238 angeformt, um die Zentrierung der freien Enden 221 beim Verbinden mit dem Abschlussring 222 zu verbessern. Es können natürlich auch in dem Abschlussring 222 für jeden Steg 214 Prägungen vorgesehen sein, die eine axiale und/oder radiale Zentrierung der freien Enden 221 der Stege 214 erleichtern.

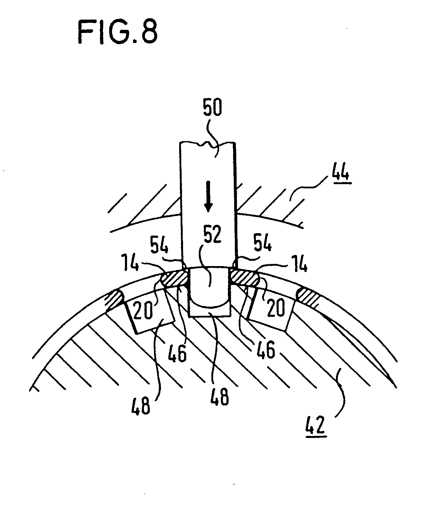

Zur Zentrierung der Käfige vor dem Anschweissen des nachträglich anzuschweissenden Abschlussrings 22 bzw. 122 bzw. 222 können auch Hilfsmittel gemäss Fig. 8 verwendet werden. Dort erkennt man ein Innenwerkzeug 42 und ein Aussenwerkzeug 44. Das Innenwerkzeug 42 weist Anlageflächen 46 für die Querstege 14 und zwischen diesen Anlageflächen 46 Ausnehmungen 48 auf. Das Aussenwerkzeug 44 weist Schieber 50 mit Zentrierfingern 52 auf, welche zwischen den Querstegen 14 hindurch in die Ausnehmungen 48 eingreifen. Durch die Zentrierfinger 52 werden die Stege 14 in Umfangsrichtung, durch die Schultern 54 in radialer Richtung zentriert. Die Zentrierfinger können auch eine geringfügige Nachbearbeitung bewirken.

Gemäss Fig. 7 wird ein Käfig in der Weise gefertigt, dass die Querstege 414 zunächst mit einem Flachstreifen 412 verschweisst werden, hierauf die Querstege 414 zu der in Fig. 7 gezeigten Form mit den Abschnitten 462, 464 und 466 gebogen werden, hierauf der Flachstreifen 412 zu dem Ring 412' gerollt wird und anschliessend die freien Enden der Querstege 466 mit dem vorgefertigten Ring 422 verschweisst werden. Man spricht unter Mitberücksichtigung des durch die Abschlussringe 412' und 422 mitbestimmten Bildes von einer M-Führung, wobei die Enden der Stege auf gleichem Durchmesser liegen.

Der Quersteg 414 weist zwei äussere Führungsabschnitte 458, 460 ausserhalb der durch die Zylinderrollenachsen definierten Zylinderfläche und einen Führungsabschnitt 462 innerhalb dieser Zylinderfläche auf. Die Führungsabschnitte 458, 460 und 462 können die Zylinderrollen 424 radial einwärts und radial auswärts halten, so dass die Zylinderrollen 424 bei der Montage eingefedert werden müssen. In diesem Fall wird eine Kantenbeschneidung 414 im Bereich der Sprünge 464 und 466 notwendig sein. Durch geschickte Wahl der Lage der Abschnitte 458, 460 und 462 kann es aber ermöglicht werden, diese Abschnitte ohne Kantenbeschneidung zu belassen, so dass sie in optimaler Weise führen und die Schmierfilmbildung begünstigen.

Zu allen Ausführungsformen ist noch nachzutragen, dass sich auch die Kantenrundung der Längsstege und damit der Abschlussringe vorteilhaft auf die Rollenführung auswirkt.

## Patentansprüche

1. Verfahren zur Herstellung eines Käfigs insbesondere für Kegelrollenlager durch Bereitstellen eines Flachstreifens mit in Streifenlängsrichtung aufeinander folgenden Fenstern, Rollen des Flachstreifens zu einem Ring und gegebenenfalls Verbinden der Ringenden an der Schlussstelle, dadurch gekennzeichnet, dass man zunächst einen kammförmigen Einlängsstegflachstreifen (10) durch Verbinden eines Längsstegs (12) mit dem jeweils einen Ende einer Vielzahl von Querstegen (14) bildet, bei dem die freien Enden (21) der Querstege (14) gegenüber der Ebene des Längsstegs (12) in radialer Richtung des zu bildenden Rings derart versetzt sind, dass nach dem anschliessenden Rollen die freien Enden (21) der Querstege (14) auf einem Kreis mit einem von dem Durchmesser des aus dem Längssteg (12) gebildeten Rings (12) unterschiedlichen Durchmesser liegen, und dass man nach dem Rollen des kammförmigen Einlängsstegflachstreifens (10) zum Ring die freien Enden (21) der Querstege mit einem Abschlussring (22) verbindet.

2. Verfahren nach Anspruch 1, dadurch gekennzeichnet, dass man die Querstege (14) mit dem Längssteg (12) verschweisst (bei 16).

3. Verfahren nach einem der Ansprüche 1 und 2, dadurch gekennzeichnet, dass man den Längssteg (12) und/oder die Querstege (14) von einem Profilmaterial nimmt, dessen Kanten (20) ein für die Fensterbegrenzung gewünschtes Profil besitzen.

4. Verfahren nach Anspruch 3, dadurch gekennzeichnet, dass man den Längssteg (12) und/oder die Querstege (14) von einem Profilmaterial mit abgerundeten Kanten (20) nimmt.

5. Verfahren nach einem der Ansprüche 1 bis 4, dadurch gekennzeichnet, dass man für den Längssteg (12) und/oder für die Querstege (14) gehärtetes oder in anderer Weise vorvergütetes Material verwendet.

6. Verfahren nach einem der Ansprüche 1 bis 5, dadurch gekennzeichnet, dass man die Querstege (14) nach dem Anbringen an dem Längssteg (12) biegt.

7. Verfahren nach einem der Ansprüche 1 bis 6, dadurch gekennzeichnet, dass man die Querstege (214) derart biegt, dass sie, ausgehend von der kleinen Basis (bei 222) des Käfigs, zunächst in der durch die Achsen der Kegelrollen definierten Konusfläche verlaufen (Abschnitt 228), sodann radial auswärts springen (Abschnitt 234), sodann ausserhalb der durch die Kegelrollenachsen definierten Konusfläche parallel zu Mantellinien der Kegelrollen (224) verlaufen (Abschnitt 236) und die andere Basis des Käfigs erreichen (bei 212').

8. Verfahren nach einem der Ansprüche 1 bis 6, dadurch gekennzeichnet, dass man die Querstege (114) derart biegt, dass sie, ausgehend von der kleinen Basis des Käfigs (bei 122), zunächst in einer durch die Kegelrollenachsen definierten Konusfläche verlaufen (Abschnitt 128), dann gegenüber dieser Konusfläche radial einwärts springen (Abschnitt 130), dann radial innerhalb dieser Konusfläche parallel zu einer Mantellinie der jeweiligen Kegelrolle (124) verlaufen (Abschnitt 132), dann radial auswärts springen (Abschnitt 134), dann radial ausserhalb der Konusfläche parallel zu einer Mantellinie der jeweiligen Kegelrolle (124) verlaufen (Abschnitt 136) und schliesslich die grosse Basis des Käfigs erreichen (bei 112').

9. Verfahren nach einem der Ansprüche 1 bis 8, dadurch gekennzeichnet, dass man die Ränder (120) der Querstege (14, 114, 214) derart beschneidet, dass sie unter Berücksichtigung der Lagergeometrie die Kegelrollen (24, 124, 224) in Umfangsrichtung des Lagers und gegebenenfalls in Radialrichtung des Käfigs in gewünschter Weise führen.

10. Verfahren nach einem der Ansprüche 1 bis 9, dadurch gekennzeichnet, dass man den Abschlussring (22, 122, 222) durch Rollen eines zunächst geradlinigen Abschlussringstreifens erzeugt.

11. Verfahren nach einem der Ansprüche 1 bis 10, dadurch gekennzeichnet, dass man an dem Abschlussring (22, 122, 222) und/oder an den Querstegen (14, 114, 214) Richtanschläge zum Ausrichten der freien Enden (21, 121, 221) der Querstege (14, 114, 214) in radialer und/oder in peripherer Richtung vorsieht.

12. Verfahren nach einem der Ansprüche 1 bis 11, dadurch gekennzeichnet, dass man die Querstege (14, 114, 214) vor dem Anschweissen des Abschlussrings (22, 122, 222) zentriert und gegebenenfalls nachformt.

13. Verfahren nach Anspruch 12, dadurch gekennzeichnet, dass man die Zentrierung und gegebenenfalls Nachverformung mittels einer Vorrichtung durchführt, die aus einem Innenwerkzeug (42) mit in Flucht zu den Fenstern liegenden Ausnehmungen (48) und aus einem Aussenwerkzeug (44) mit in Flucht zu den Fenstern liegenden Schiebern (50) besteht, wobei die Schieber (50) durch die Fenster in die Ausnehmungen (48) einführbar sind.

14. Verfahren nach einem der Ansprüche 1 bis 13, dadurch gekennzeichnet, dass man denjenigen Längssteg (12, 112, 212), welcher die grössere Basis des Käfigs ergibt, mit den Querstegen (14, 114, 214) in der Ebene verbindet.

15. Verfahren zur Herstellung eines Käfigs für Rollenlager durch Bereitstellen eines Flachstreifens mit in Streifenlängsrichtung aufeinanderfolgenden Fenstern, Rollen des Flachstreifens zu einem Ring und gegebenenfalls Verbinden der Ringenden an der Schlussstelle, dadurch gekennzeichnet, dass man zunächst einen kammförmigen Einlängsstegflachstreifen (10) durch Verbinden eines Längsstegs (12) mit dem jeweils einen Ende einer Vielzahl von Querstegen (14) bildet, dass man hierauf die Querstege (14) senkrecht zur Ebene des kammförmigen Einlängsstegflachstreifens deformiert, dass man hierauf den Einlängsstegflachstreifen zu einem Ring rollt und dass man hierauf die freien Enden der Stege (14) mit einem Abschlussring (22) verbindet.

16. Verfahren zur Herstellung eines Käfigs für Rollenlager durch Bereitstellen eines Flachstreifens mit in Streifenlängsrichtung aufeinanderfolgenden Fenstern, Rollen des Flachstreifens zu einem Ring und gegebenenfalls Verbinden der Ringenden an der Schlussstelle, dadurch gekennzeichnet, dass man zunächst einen kammförmigen Einlängsstegflachstreifen (10) durch Verbinden eines Längsstegs (12) mit dem jeweils einen Ende einer Vielzahl von Querstegen (14) bildet, wobei man den Längssteg (12) und/oder die Querstege (14) von einem Profilmaterial mit abgerundeten Kanten (20) nimmt, dass man hierauf den Einlängsstegflachstreifen zu einem Ring rollt und dass man hierauf die freien Enden der Stege (14) mit einem Abschlussring (22) verbindet.

17. Verfahren zur Herstellung eines Käfigs für Rollenlager durch Bereitstellen eines Flachstreifens mit in Streifenlängsrichtung aufeinanderfolgenden Fenstern, Rollen des Flachstreifens zu einem Ring und gegebenenfalls Verbinden der Ringenden an der Schlussstelle, dadurch gekennzeichnet, dass man zunächst einen kammförmigen Einlängsstegflachstreifen (10) durch Verbinden eines Längsstegs (12) mit dem jeweils einen Ende einer Vielzahl von Querstegen (14) bildet, wobei man für den Längssteg (12) und/oder die Querstege (14) gehärtetes oder in anderer Weise vorvergütetes Material verwendet, dass man hierauf den Einlängsstegflachstreifen zu einem Ring rollt und dass man hierauf die freien Enden der Stege (14) mit einem Abschlussring (22) verbindet.

18. Käfig insbesondere für Rollenlager, hergestellt nach dem Verfahren gemäss einem der Ansprüche 1 bis 17, dadurch gekennzeichnet, dass er aus zwei Ringen (12', 22) unterschiedlichen Durchmessers besteht, die durch eine Vielzahl von Querstegen (14) unter Bildung von Fenstern (26) miteinander durch Schweissen (bei 16) verbunden sind.

## Claims

1. Method for the production of a cage, especially for taper-roller bearings, by preparation of a flat strip with windows succeeding one another in the longitudinal direction of the strip, rolling of the flat strip into a ring and possibly connecting of the ring ends at the closure point, characterised in that, firstly, a single-longitudinal-bar flat strip (10) of comb form is formed by connection of a longitudinal bar (12) with one end of each of a plurality of cross-bars (14), in which the free ends (21) of the cross-bars (14) are offset in the radial direction of the ring to be formed, in relation to the plane of the longitudinal bar (12), in such a way that, after the subsequent rolling, the free ends (21) of the cross-bars (14) lie on a circle having a diameter different from the diameter of the ring (12) formed from the longitudinal bar (12), and in that, after the rolling of the single-longitudinal-bar flat strip (10) into the ring, the free ends (21) of the cross-bars are connected with an end ring (22).

2. Method according to claim 1, characterised in that the cross-bars (14) are welded (at 16) with the longitudinal bar (12).

3. Method according to claims 1 and 2, characterised in that the longitudinal bar (12) and/or the cross-bars (14) are taken from a profiled stock, the edges (20) of which possess a profile desired for the limitation of the windows.

4. Method according to claim 3, characterised in that the longitudinal bar (12) and/or the cross-bars (14) are taken from a profiled stock with rounded edges (20).

5. Method according to one of claims 1 to 4, characterised in that hardened or otherwise pre-tempered stock is used for the longitudinal bar (12) and/or for the cross-bars (14).

6. Method according to one of claims 1 to 5, characterised in that the cross-bars (14) are bent after fitting to the longitudinal bar (12).

7. Method according to one of claims 1 to 6, characterised in that the cross-bars (214) are bent in such a way that, starting from the small base (at 222) of the cage, they firstly extend in the cone surface defined by the axes of the taper rollers (section 228), then spring radially outwards (section 234), then extend outside the cone surface defined by the taper-roller axes, parallel with surfacelines of the taper rollers (224) (section 236), and reach the other base of the cage (at 212').

8. Method according to one of claims 1 to 6, characterised in that the cross-bars (114) are bent in such a way that, starting from the small base of the cage (at 122), they firstly extend in a cone surface defined by the taper-roller axes (section 128), then spring radially inwards in relation to this cone surface (section 130), then proceed radially within this cone surface parallel to a surface line of the respective taper roller (124) (section 132), then spring radially outwards (section 134), then proceed radially outside the cone surface parallel to a surface line of the respective taper roller (124) (section 136), and finally reach the large base of the cage (at 112').

9. Method according to one of claims 1 to 8, characterised in that the edges (120) of the cross-bars (14, 114, 214) are cut in such a way that, taking consideration of the bearing geometry, they guide the taper rollers (24, 124, 224) in the peripheral direction of the bearing and possibly in the radial direction of the cage in desired manner.

10. Method according to one of claims 1 to 9, characterised in that the end ring (22, 122, 222) is produced by rolling of an initially rectilinear end-ring strip.

11. Method according to one of claims 1 to 10, characterised in that on the end ring (22, 122, 222) and/or on the cross-bars (14, 114, 214) there are provided directing stops for orienting the free ends (21, 121, 221) of the cross-bars (14, 114, 214) in the radial and/or peripheral direction.

12. Method according to one of claims 1 to 11, characterised in that the cross-bars (14, 114, 214) are centred and possibly re-shaped before the welding-on of the end ring (22, 122, 222).

13. Method according to claim 12, characterised in that the centring and possible subsequent deformation are carried out by means of a device which consists of an inner tool (42) with recesses (48) lying in alignment with the windows and of an outer tool (44) with sliders (50) lying in alignment with the windows, the sliders (50) being introducible through the windows into the recesses (48).

14. Method according to one of claims 1 to 13, characterised in that the longitudinal bar (12, 112, 212) which produces the larger base of the cage is connected in the plane with the cross-bars (14, 114, 214).

15. Method for the production of a cage for roller bearings by preparation of a flat strip with windows succeeding one another in the longitudinal direction of the strip, rolling of the flat strip into a ring, and possibly connecting of the ring ends at the closure point, characterised in that firstly a single-longitudinal-bar flat strip (10) of comb form is formed by connecting of a longitudinal bar (12) with one end of each of a plurality of cross-bars (14), in that thereupon the cross-bars (14) are deformed perpendicularly of the plane of the single-longitudinal-bar flat strip of comb form, in that thereupon the single-longitudinal-bar flat strip is rolled into a ring, and in that thereupon the free ends of the bars (14) are connected with an end ring (22).

16. Method for the production of a cage for roller bearings by preparation of a flat strip with windows succeeding one another in the longitudinal direction of the strip, rolling of the flat strip into a ring, and possibly connecting of the ring ends at the closure point, characterised in that firstly a single-longitudinal-bar flat strip (10) of comb form is formed by connecting of a longitudinal bar (12) with one end of each of a plurality of cross-bars (14), the longitudinal bar (12) and/or the cross-bars (14) being taken from a profiled stock with rounded edges (20), in that thereupon the single-longitudinal-bar flat strip is rolled into a ring and in that thereupon the free ends of the bars (14) are connected with an end ring (22).

17. Method for the production of a cage for roller bearings by preparation of a flat strip with windows succeeding one another in the longitudinal direction of the strip, rolling of the flat strip into a ring, and possibly connecting of the ring ends at the closure point, characterised in that firstly a single-longitudinal-bar flat strip (10) of comb form is formed by connecting of a longitudinal bar (12) with one end of each of a plurality of cross-bars (14), hardened or otherwise pre-tempered stock being used for the longitudinal bar (12) and/or the cross-bars (14), in that thereupon the single-longitudinal-bar flat strip is rolled into a ring, and in that thereupon the free ends of the bars (14) are connected with an end ring (22).

18. Cage especially for roller bearings, produced according to the method according to one of claims 1 to 17, characterised in that it consists of two rings (12', 22) of different diameters which are connected with another by welding (at 16) by a plurality of cross-bars (14), windows (26) being formed.

## Revendications

1. Procédé pour la fabrication d'une cage pour roulements, en particulier à rouleaux coniques, par préparation d'une bande plate avec une succession de fenêtres dans la direction longitudinale de la bande, enroulement de la bande plate pour former un anneau, et liaison éventuelle des extrémités de l'anneau à l'endroit où celui-ci se referme, caractérisé en ce que l'on forme d'abord une bande plate (10) en forme de peigne avec un seul élément longitudinal, par liaison d'un élément longitudinal (12) avec les premières extrémités d'une pluralité de traverses (14), les extrémités libres (21) des traverses (14) étant décalées par rapport au plan de l'élément longitudinal (12), dans la direction radiale de l'anneau à former, de manière qu'après enroulement de la bande, les extrémités libres (21) des traverses (14) se situent sur un cercle de diamètre différent du diamètre de la bague formée à partir de l'élément longitudinal (12), et en ce qu'après enroulement de la bande plate en forme de peigne (10) pour former un anneau, les extrémités libres (21) des traverses sont réunies à une bague de fermeture (22).

2. Procédé selon la revendication 1, caractérisé en ce que les traverses (14) sont liées à l'élément longitudinal (12) par soudage (en 16).

3. Procédé selon les revendications 1 et 2, caractérisé en ce que l'élément longitudinal (12) et/ou les traverses (14) sont réalisés à partir d'un matériau profilé, dont les bords (20) possèdent un profil approprié pour la délimitation des fenêtres.

4. Procédé selon la revendication 3, caractérisé en ce que l'élément longitudinal (12) et/ou les traverses (14) sont réalisés à partir d'un matériau profilé à bords arrondis (20).

5. Procédé selon l'une des revendications 1 à 4, caractérisé en ce que l'on utilise, pour la réalisation de l'élément longitudinal (12) et/ou des traverses (14), un matériau trempé ou amélioré d'une autre manière.

6. Procédé selon l'une des revendications 1 à 5, caractérisé en ce que les traverses (14) sont pliées, après avoir été réunies à l'élément longitudinal (12).

7. Procédé selon l'une des revendications 1 à 6, caractérisé en ce que les traverses (214) sont pliées de telle sorte que, en partant de la petite base (en 222) de la cage, elles s'étendent d'abord sur la surface conique définie par les axes des rouleaux coniques (partie 228), puis s'écartent vers l'extérieur en direction radiale (partie 234), ensuite s'étendent en direction parallèle aux génératrices des rouleaux coniques (224) à l'extérieur de la surface conique définie par les axes des rouleaux coniques (partie 226) et, enfin, atteignent l'autre base de la cage (en 212').

8. Procédé selon l'une des revendications 1 à 6, caractérisé en ce que les traverses (114) sont pliées de telle sorte que, en partant de la petite base de la cage (en 122), elles s'étendent d'abord sur la surface conique définie par les axes des rouleaux coniques (partie 128), puis s'écartent vers l'intérieur en direction radiale (partie 130) par rapport à ladite surface conique, ensuite s'étendent, à l'intérieur de ladite surface conique, parallèlement à une génératrice du rouleau conique adjacent (124) (partie 132), puis s'écartent vers l'extérieur en direction radiale (partie 134), ensuite s'étendent à l'extérieur de ladite surface conique parallèlement à une génératrice du rouleau conique adjacent (124) (partie 136) et, enfin, atteignent la grande base de la cage (en 112').

9. Procédé selon l'une des revendications 1 à 8, caractérisé en ce que les bords (120) des traverses (14, 114, 214) sont coupés de telle manière que, compte tenu de la géométrie du roulement, ils guident de façon appropriée les rouleaux coniques (24, 124, 224) dans la direction circonférentielle du roulement, ainsi qu'éventuellement dans la direction radiale de la cage.

10. Procédé selon l'une des revendications 1 à 9, caractérisé en ce que la bague de fermeture (22, 122, 222) est obtenue par enroulement d'une bande initialement rectiligne.

11. Procédé selon l'une des revendications 1 à 10, caractérisé en ce que l'on prévoit, sur la bague de fermeture (22, 122, 222) et/ou sur les traverses (14, 114, 214), des butées de redressement prévues pour redresser les extrémités libres (21, 121, 221) des traverses (14, 114, 214) en direction radiale et/ou périphérique.

12. Procédé selon l'une des revendications 1 à 11, caractérisé en ce que les traverses (14, 114, 214) sont centrées et éventuellement subissent un nouveau formage, avant soudage de la bague de fermeture (22, 122, 222).

13. Procédé selon la revendication 12, caractérisé en ce que l'on exécute le centrage et le formage éventuel au moyen d'un dispositif qui se compose d'un outil intérieur (42) présentant des évidements (48) situés en correspondance avec les fenêtres de la cage, et d'un outil extérieur (44) comportant des poussoirs (50) disposés en correspondance avec les fenêtres, les poussoirs (50) pouvant être introduits dans les évidements (48) au travers de ces fenêtres.

14. Procédé selon l'une des revendications 1 à 13, caractérisé en ce que l'élément longitudinal (12, 112, 212) relié aux traverses (14, 114, 214) est celui qui deviendra la grande base de la cage.

15. Procédé pour la fabrication d'une cage pour roulements par préparation d'une bande plate avec une succession de fenêtres dans la direction longitudinale de la bande, enroulement de la bande plate pour former un anneau, et liaison éventuelle des extrémités de l'anneau à l'endroit où celui-ci se referme, caractérisé en ce que l'on forme d'abord une bande plate (10) en forme de peigne, avec un seul élément longitudinal, par liaison d'un élément longitudinal (12) avec les premières extrémités d'une pluralité de traverses (14), en ce qu'on déforme ensuite les traverses (14) perpendiculairement au plan de la bande en forme de peigne, en ce qu'on enroule ensuite cette bande plate pour former un anneau et en ce que, enfin, les extrémités libres des traverses (14) sont réunies à une bague de fermeture (22).

16.	Procédé pour la fabrication d'une cage pour roulements par préparation d'une bande plate avec une succession de fenêtres dans la direction longitudinale de la bande, enroulement de la bande plate pour former un anneau, et liaison éventuelle des extrémités de l'anneau à l'endroit où celui-ci se referme, caractérisé en ce que l'on forme d'abord une bande plate (10) en forme de peigne, avec un seul élément longitudinal, par liaison d'un élément longitudinal (12) avec les premières extrémités d'une pluralité de traverses (14), l'élément longitudinal (12) et/ou les traverses (14) étant réalisés à partir d'un matériau profilé à bords arrondis (20), en ce qu'on enroule ensuite cette bande plate pour former un anneau et en ce que, enfin, les extrémités libres des traverses (14) sont réunies à une bague de fermeture (22).

17.	Procédé pour la fabrication d'une cage pour roulements par préparation d'une bande plate avec une succession de fenêtres dans la direction longitudinale de la bande, enroulement de la bande plate pour former un anneau, et liaison éventuelle des extrémités de l'anneau à l'endroit où celui-ci se referme, caractérisé en ce que l'on forme d'abord une bande plate (10) en forme de peigne, avec un seul élément longitudinal, par liaison d'un élément longitudinal (12) avec les premières extrémités d'une pluralité de traverses (14), l'élément longitudinal (12) et/ou les traverses (14) étant réalisés en un matériau trempé ou amélioré d'une autre manière, en ce qu'on enroule ensuite la bande plate pour former un anneau et en ce que, enfin, les extrémités libres des traverses (14) sont réunies à une bague de fermeture (22).

18. Cage, en particulier pour roulements à rouleaux, fabriquée par le procédé selon l'une des revendications 1 à 17, caractérisée en ce qu'elle se compose de deux bagues (12', 22) de diamètres différents reliées entre elles par une pluralité de traverses (14) réunies aux bagues par soudage (en 16) et délimitant des fenêtres (26).

FIG.1

16

14

10

16

12

26

14

26

21

16

18

III

14

21

18

III

26

14

26

21

14

21

FIG.3

20          20

14

FIG.2

24

12'

22

14

21

# FIG.4

# FIG.5

FIG.6

FIG.7

# FIG.8